# EUROPÄISCHE PATENTSCHRIFT

(11) **EP 0 771 303 B1**
(45) Veröffentlichungstag und Bekanntmachung des Hinweises auf die Patenterteilung: **17.11.1999**
(21) Anmeldenummer: 95926398.9
(22) Anmeldetag: 07.07.1995
(51) Int. Cl.: B65H 59/16, H02K 49/06

(54) **ELEKTROMAGNETISCHE HYSTERESEBREMSE**
ELECTROMAGNETIC HYSTERESIS BRAKE
FREIN ELECTROMAGNETIQUE A EFFET D'HYSTERESIS

(30) Priorität: 12.07.1994 DE 4424457
(43) Veröffentlichungstag der Anmeldung: 07.05.1997
(73) Patentinhaber: ZF FRIEDRICHSHAFEN Aktiengesellschaft, 88038 Friedrichshafen (DE)
(72) Erfinder: SCHNEIDER, Rudolf, D-88074 Meckenbeuren (DE)
(86) Internationale Anmeldenummer: EP9502633
(87) Internationale Veröffentlichungsnummer: WO9601779

(56) Entgegenhaltungen:
- DE-A- 3 732 766
- DE-A- 3 828 110
- ZF-KATALOG KB2, ZAHNRADFABRIK FRIEDRICHSHAFEN 'Hysteresekupplungen und -bremsen' in der Anmeldung erwähnt
- ANTRIEBSTECHNIK, Bd. 24, Nr. 6, 1985 MAINZ DE, Seiten 42-44, 'Exakte Zugkraftregelung durch Hysteresekupplungen und -bremsen'

## Beschreibung

Die Erfindung betrifft eine elektromagnetische Hysteresebremse nach der im Oberbegriff von Anspruch 1 näher definierten Art.

Eine Hysteresebremse dieser Art ist aus dem ZF-Katalog "Hysteresekupplungen und -bremsen" KB 2 bekannt.

Die DE 37 32 766 A1 offenbart eine dauermagneterregte Hysteresekupplung bzw. -bremse. Die Eintauchtiefe eines Hystereseringes in einen festen Ringluftspalt zwischen zwei Polringen ist veränderbar, wodurch bei dieser dauermagneterregten Hysteresekupplung bzw. -bremse ein verstellbares Drehmoment erzielt wird.

Elektromagnetische Hysteresebremsen werden z. B. in Textilmaschinen als sogenannte Fadenbremsen eingesetzt. Das typische Merkmal solcher Maschinen ist eine Vielzahl von Produktionseinheiten, welche aneinandergereiht sind und parallel den gleichen Prozeßablauf besitzen.

Die einzelnen Fadenbremsen werden zentral elektrisch gesteuert. Dies bedeutet, mit dem Strom wird das Drehmoment für einen optimalen Prozeßablauf eingestellt. Dabei müssen jedoch alle Bremsen bei gleichem Strom auch genau das gleiche Drehmoment aufweisen. Ein Problem dabei liegt jedoch darin, daß die aufgrund unvermeidlicher Fertigungstoleranzen auftretenden Streuungen in der Breite bzw. Größe der Luftspalte der Bremse, insbesondere des ringförmigen Luftspaltes, so hoch sind, daß alle in einer Maschine eingesetzten Bremsen auf ein einheitliches Drehmoment justiert bzw. geeicht werden müssen. Dies bedeutet einen erheblichen Aufwand an Kosten und Zeit.

Der vorliegenden Erfindung liegt daher die Aufgabe zugrunde, eine elektromagnetische Hysteresebremse der eingangs erwähnten Art zu schaffen, bei der durch einfache Maßnahmen eine Justierung bezüglich eines einheitlichen Drehmomentes erreicht werden kann.

Erfindungsgemäß wird diese Aufgabe durch die im kennzeichnenden Teil von Anspruch 1 genannten Merkmale gelöst.

Der Erfinder ging bei der Lösung dieser Aufgabe von der Erkenntnis aus, daß die Größe der Luftspalte eine Auswirkung auf die Kennlinie des Drehmomentverlaufes besitzt. Je größer z. B. der Luftspalt ist, desto geringer wird das Drehmoment.

Wie erwähnt, lassen sich jedoch unterschiedlich große Luftspalte nicht vermeiden.

Dadurch, daß nunmehr ein einstellbarer Luftspalt "künstlich" geschaffen wird, läßt sich durch eine entsprechende Veränderung dieses einstellbaren Luftspaltes erreichen, daß letztlich die Summe aller Luftspalte einer Hysteresebremse gleich gehalten werden kann, womit man für eine Hysteresebremse ein genau definiertes bzw. vorgewähltes Drehmoment schaffen kann.

Hierzu ist es lediglich erforderlich, daß man nach Herstellung einer Hysteresebremse der eingangs erwähnten Art einmal einen Eichstrom einstellt und dann den einstellbaren Luftspalt von einem Minimum bis zu einem Maximum so lange ändert, bis das gewünschte Drehmoment erreicht ist.

In einfacher Weise wird man einen Luftspalt zwischen dem inneren und dem äußeren Polringteil einstellbar ausbilden, wobei sich insbesondere der Luftspalt zwischen dem topfartig den inneren Polringteil umfassenden äußeren Polringteil und einer Stirnseite des inneren Polringteils hierfür anbietet.

Für eine genaue Einstellung des Luftspaltes wird man diesen in vorteilhafter Weise keilförmig mit zur Rotationsachse größer werdender Spaltgröße ausbilden.

Die Erzeugung der Keilform zwischen dem inneren und dem äußeren Polringteil kann auf verschiedene Weise erfolgen.

So ist es z. B. möglich, eine tellerfederförmig ausgebildete Scheibe zwischen den beiden Polringteilen an dieser Stelle anzuordnen, die elastisch verformbar ist und durch die auf diese Weise der Abstand bzw. der Luftspalt zwischen dem inneren und dem äußeren Polringteil eingestellt wird.

Alternativ dazu kann entweder der äußere Polringteil auf der dem inneren Polringteil zugeordneten Seite eine Keilform aufweisen, wobei in diesem Fall der äußere Polringteil in diesem Bereich elastisch verformbar sein muß, oder es besitzt - in Umkehrung dazu - der innere Polringteil eine entsprechende Keil- bzw. Teller- oder Hohlform auf der dem äußeren Polringteil zugeordneten Stirnseite.

Die Änderung der Größe des Luftspaltes läßt sich auf verschiedene Weise erreichen. Hierzu kann z. B. in einfacher Weise eine Befestigungsschraube vorgesehen sein, durch die der Luftspalt einstellbar ist, und zwar derart, daß der Abstand zwischen dem inneren und dem äußeren Polringteil entsprechend geändert wird.

In einer konstruktiven Ausgestaltung kann hierzu vorgesehen sein, daß der Rücken des äußeren Polringteils mit einer zentralen Bohrung versehen ist, durch die Befestigungsschraube steckbar und in den inneren Polringteil eingeschraubt ist.

Durch ein gezieltes Belassen eines Restluftspaltes, d. h. einem nicht vollen Anziehen der Schraube, können unterschiedliche Ringspalte an den Polen kompensiert werden. Dies bedeutet z. B., daß man bei einem gleichen Magnetspulenstrom die Summe der Gesamt-Luftspaltwiderstände und damit auch das Drehmoment vereinheitlichen kann. Auf diese Weise wird eine einfache Drehmomentjustierung geschaffen.

Nachfolgend sind zwei Ausführungsbeispiele der Erfindung anhand der Zeichnung prinzipmäßig bschrieben. Es zeigt:
- Fig. 1: einen Längsschnitt durch ein Ausführungsbeispiel mit einer tellerfederförmig ausgebildeten Scheibe mit einem maxialen Luftspalt;
- Fig. 2: das Ausführungsbeispiel nach der Fig. 1 mit einem minimalen bzw. ohne Luftspalt;
- Fig. 3: einen Schnitt nach der Linie III-III der Figur 1;
- Fig. 4: ein weiteres Ausführungsbeispiel der Erfindung.

Da die Hysteresebremse grundsätzlich von bekannter Bauart ist, werden im Zusammenhang mit dem Ausführungsbeispiel nur die für die Erfindung wesentlichen Teile näher beschrieben.

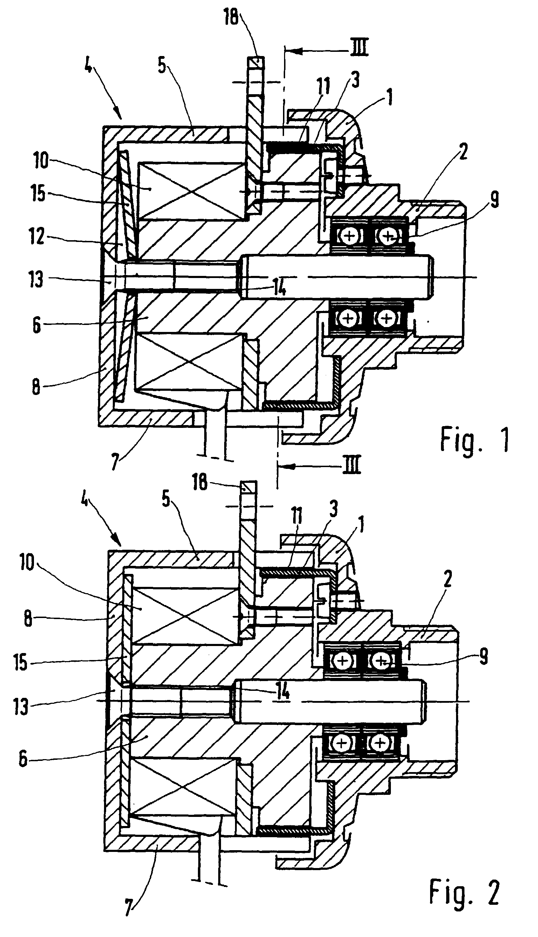

Die Hysteresebremse nach dem Ausführungsbeispiel der Fig. 1 bis 3 weist einen Anker 1 auf, der fest auf einer Welle 2 angeordnet ist. Aus dem Anker 1 ragt ein Hysteresering 3 aus dauermagnetischem Material, dessen Achse koaxial zur Achse der Welle 2 liegt.

Ein Bremsmagnet 4, der stationär bzw. feststehend ist, weist einen äußeren Polringteil 5 und einen inneren Polringteil 6 auf. Der äußere Polringteil 5 besitzt eine topfartige Ausgestaltung mit einem ringförmigen Umfangsteil 7, und einem tellerartigen Rücken 8. Der tellerartige Rücken 8 umschließt auf einer Stirnseite den inneren Polringteil 6, während auf der anderen Seite der innere Polringteil mit Abstand vor dem Anker 1 liegt. Der innere Polringteil 6 ist durch Kugellager 9 von der Welle 2 getrennt.

Der innere Polringteil 6 ist mit unterschiedlichen Durchmessern stufenartig ausgebildet, wobei eine Magnetspule 10 zwischen einem Absatz des inneren Polringteils 6 und der inneren Umfangswand des äußeren Polringteils 5 eingesetzt ist.

Auf der dem Anker zugewandten Seite ist der Innendurchmesser des äußeren Polringteils 5 und der Außendurchmesser des inneren Polringteils 6 so gewählt, daß sich ein ringförmiger Luftspalt 11 ergibt, in dem der Hysteresering 3 rotieren kann.

Zwischen dem tellerartigen Rücken 8 und der auf dieser Seite liegenden Stirnseite des inneren Polringes 6 ist eine tellerfederartige Scheibe 15 angeordnet, die aufgrund ihrer Form einen keilförmig zur Rotationsachse hin sich vergrößernden ringförmigen Luftspalt 12 ergibt.

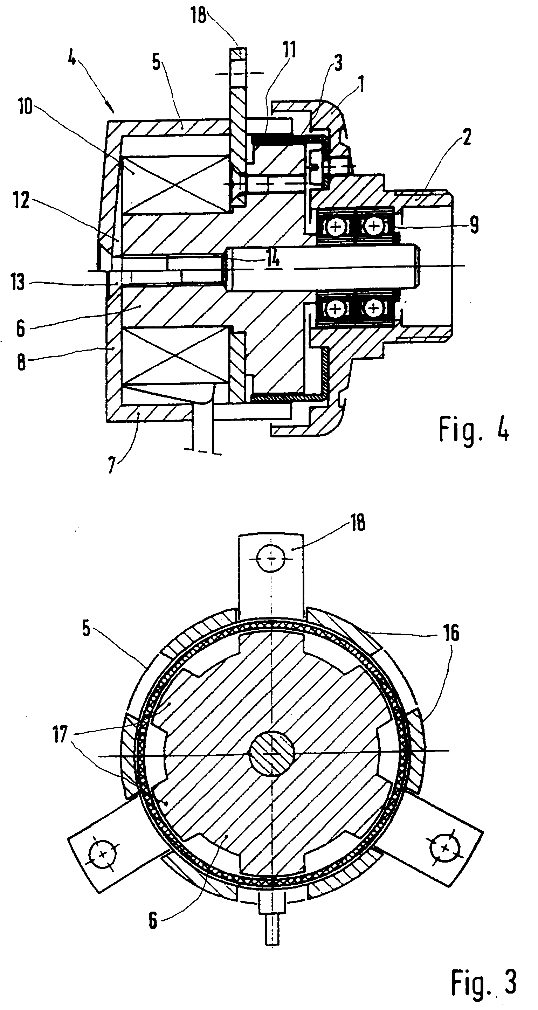

Zur Erzeugung des erforderlichen Drehmomentes sind in bekannter Weise die Pole 16 des äußeren Polringteils 5 umfangsmäßig gegenüber den Polen 17 des inneren Polringteils 6 versetzt (siehe Fig. 3). Aus dieser Figur sind auch die Verbindungslappen 18 für die Bremse ersichtlich.

Die Einstellung eines gewünschten Drehmomentes wird durch eine Änderung der Größe des Luftspaltes 12 erreicht.

Hierzu ist der Rücken 8 des äußeren Polringteils 5 mit einer zentralen Bohrung versehen, durch die eine Befestigungsschraube 13 gesteckt ist. Die Befestigungsschraube 13 ragt in eine Gewindebohrung 14 des inneren Polringteils 6.

Durch ein gesteuertes Anziehen der Befestigungsschraube 13 läßt sich die Größe des Luftspaltes 12 entsprechend ändern. Durch das Anziehen der Befestigungsschraube 13 wird die tellerförmige Scheibe 15 entsprechend verformt, und zwar maximal bis zu einer völligen Beseitigung des Luftspaltes 12. Diese Position ist in der Fig. 2 dargestellt.

Dies bedeutet, für eine minimale Drehmomenteinstellung wird man die Luftspaltbreite X so groß wie möglich machen, während man für eine maximale Drehmomenteinstellung den Luftspalt 12 zu Null werden läßt. Durch diese Maßnahme läßt sich auf einfache Weise für mehrere Hysteresebremsen eine gleiche Drehmomenteinstellung erreichen, und zwar unabhängig von Fertigungstoleranzen, insbesondere bezüglich des Ringspaltes 11.

In der Fig. 4 ist eine alternative Ausgestaltung für die Schaffung eines einstellbaren Luftspaltes 12 zwischen dem äußeren Polringteil 5 und einer Stirnseite des inneren Polringteils 6 dargestellt. Grundsätzlich ist diese Ausführungsform in gleicher Weise aufgebaut wie das Ausführungsbeispiel nach den Fig. 1 bis 3, weshalb nachfolgend für gleiche Teile auch die gleichen Bezugszeichen verwendet werden.

Im Unterschied zu dem Ausführungsbeispiel nach den Fig. 1 bis 3 ist dabei statt einer gesonderten Scheibe 15 der Rücken 8 des äußeren Polringteils leicht konisch derart ausgebildet, daß sich ein Spalt in Richtung zur Rotationsachse der Welle 2 bildet, der sich in Richtung zur Rotationsachse auch vergrößert. Bei dieser Ausgestaltung ist es selbstverständlich erforderlich, daß der Rücken 8 entsprechend elastisch ausgebildet ist, so daß sich bei einem Anziehen der Befestigungsschraube 13 der Rücken 8 entsprechend verformt, wobei er sich im Extremfall ohne den dazwischenliegenden Luftspalt 12 an die gesamte Stirnseite des inneren Polringes 6 anlegen kann. Zur Vereinfachung ist in der Fig. 4 die Position mit Luftspalt 12 in der oberen Hälfte und die Position ohne Luftspalt in der unteren Hälfte dargestellt.

Ein gleiches Ergebnis läßt sich auch erreichen, wenn statt dessen die Stirnseite des inneren Polringteils nach innen bzw. in Richtung auf den Anker von außen nach innen gewölbt ist.

### Bezugszeichen

- 1: Anker
- 2: Welle
- 3: Hysteresering
- 4: Bremsmagnet
- 5: äußeres Polringteil
- 6: inneres Polringteil
- 7: ringförmiges Umfangsteil
- 8: tellerartiger Rücken
- 9: Kugellager
- 10: Magnetspule
- 11: Ringspalt
- 12: Spalt
- 13: Befestigungsschraube
- 14: Gewindebohrung
- 15: Scheibe
- 16: Pole
- 17: Pole
- 18: Verbindungsklappen

## Patentansprüche

1. Elektromagnetische Hysteresebremse mit einem stationären Bremsmagneten (4), der einen zweiteiligen Polring mit einem inneren und mit einem äußeren Polringteil (5, 6) und eine Magnetspule (10) aufweist, mit einem rotierenden Anker (1), der mit einer Welle (2) verbunden ist und der mit einem mit dem Anker rotierenden Ring (3) aus dauermagnetischem Material versehen ist, wobei der Ring in einen ringförmigen Luftspalt (11) des Polringes ragt, der zwischen dem inneren und dem äußeren Polringteil gebildet ist, dadurch **gekennzeichnet,** daß ein Luftspalt (12) zwischen dem inneren und dem äußeren Polringteil (5, 6) einstellbar ist.

2. Hysteresebremse nach Anspruch 1, dadurch **gekennzeichnet,** daß der Luftspalt (12) zwischen dem topfartig den inneren Polringteil (6) umfassenden äußeren Polringteil (5) und einer Stirnseite des inneren Polringteils (6) angeordnet ist.

3. Hysteresebremse nach Anspruch 2, dadurch **gekennzeichnet,** daß die Stirnseite des inneren Polringteils (6), die an den Luftspalt (12) angrenzt, die Stirnseite ist, die von dem ringförmigen Luftspalt (11) abgewandt ist.

4. Hysteresebremse nach Anspruch 2 oder 3, dadurch **gekennzeichnet,** daß der Luftspalt (12) keilförmig mit zur Rotationsachse größer werdender Spaltgröße ausgebildet ist.

5. Hysteresebremse nach einem der Ansprüche 2 bis 4, dadurch **gekennzeichnet,** daß zwischen dem äußeren Polringteil (5) und einer Stirnseite des inneren Polringteils (6) eine tellerfederförmig ausgebildete elastische Scheibe (15) angeordnet ist, wobei der axiale Abstand bzw. der Luftspalt (12) zwischen dem inneren und dem äußeren Polringteil (5, 6) einstellbar ist.

6. Hysteresebremse nach einem der Ansprüche 2 bis 4, dadurch **gekennzeichnet,** daß der äußere Polringteil (5) einen elastischen tellerartigen Rücken (8) aufweist, der den inneren Polringteil (6) wenigstens teilweise umschließt, wobei der Luftspalt (12) zwischen dem Rücken (8) des äußeren Polringteils (5) und dem inneren Polringteil (6) einstellbar ist.

7. Hysteresebremse nach Anspruch 5 oder 6, dadurch **gekennzeichnet,** daß der Luftspalt (12) durch wenigstens eine Befestigungsschraube (13) einstellbar ist.

8. Hysteresebremse nach Anspruch 7, dadurch **gekennzeichnet,** daß der Rücken (8) des äußeren Polringteils (5) mit einer zentralen Bohrung versehen ist, durch die die Befestigungsschraube (13) steckbar und in den inneren Polringteil (6) eingeschraubt ist.

## Claims

1. Electromagnetic hysteresis brake having a stationary braking magnet (4), which comprises a two-part pole ring with an inner and with an outer pole ring part (5, 6) and a magnet coil (10), having a rotating armature (1), which is connected to a shaft (2) and which is provided with a ring (3) of permanent-magnetic material rotating with the armature, the ring projecting into an annular air gap (11) of the pole ring formed between the inner and the outer pole ring part, characterized in that an air gap (12) between the inner and the outer pole ring part (5, 6) is adjustable.

2. Hysteresis brake according to claim 1, characterized in that the air gap (12) is disposed between the outer pole ring part (5), which in a pot-like manner encloses the inner pole ring part (6), and an end face of the inner pole ring part (6).

3. Hysteresis brake according to claim 2, characterized in that the end face of the inner pole ring part (6) lying adjacent to the air gap (12) is the end face remote from the annular air gap (11).

4. Hysteresis brake according to claim 2 or 3, characterized in that the air gap (12) is wedge-shaped with its gap size increasing towards the axis of rotation.

5. Hysteresis brake according to one of claims 2 to 4, characterized in that a flexible disc (15) in the form of a cup spring is disposed between the outer pole ring part (5) and an end face of the inner pole ring part (6), the axial clearance or air gap (12) between the inner and the outer pole ring part (5, 6) being adjustable.

6. Hysteresis brake according to one of claims 2 to 4, characterized in that the outer pole ring part (5) has a flexible plate-like back (8), which at least partially encloses the inner pole ring part (6), the air gap (12) between the back (8) of the outer pole ring part (5) and the inner pole ring part (6) being adjustable.

7. Hysteresis brake according to claim 5 or 6, characterized in that the air gap (12) is adjustable by means of at least one fastening screw (13).

8. Hysteresis brake according to claim 7, characterized in that the back (8) of the outer pole ring part (5) is provided with a central bore, through which the fastening screw (13) is insertable and is screwed into the inner pole ring part (6).

## Revendications

1. Frein électromagnétique à hystérésis avec un aimant-frein stationnaire (4) comportant une jante polaire en deux parties avec une partie interne et une partie externe de jante polaire (5, 6) et une bobine magnétique (10), avec un induit rotatif (1) relié à une arbre (2) et pourvu d'une bague en matériau à aimantation permanente (3) tournant avec l'induit, la bague se projetant dans un entrefer annulaire (11) de la jante polaire formé entre la partie interne et la partie externe de la jante polaire, **caractérisé** en ce qu'un entrefer (12) entre la partie intérieure et la partie extérieure (5, 6) de la jante polaire est réglable.

2. Frein à hystérésis selon la revendication 1, **caractérisé** en ce que l'entrefer (12) est agencé entre la partie intérieure (6) de la jante polaire entourant en forme de pot la partie extérieure (5) de la jante polaire et une des faces frontales de la partie intérieure (6) de la jante polaire.

3. Frein à hystérésis selon la revendication 2, **caractérisé** en ce que la face frontale de la partie intérieure (6) de la jante polaire qui est contigue à l'entrefer (12) est la face frontale opposée à l'entrefer annulaire (11).

4. Frein à hystérésis selon la revendication 2 ou 3, **caractérisé** en ce que l'entrefer (12) est en forme de coin, avec augmentation de la grandeur de l'entrefer en direction vers l'axe de rotation.

5. Frein à hystérésis selon l'une des revendications 2 à 4, **caractérisé** en ce qu'entre la partie extérieure (5) de la jante polaire et une face frontale de la partie intérieure (6) de la jante polaire est disposé un disque élastique (15) en forme de rondelle-ressort, la distance axiale, respectivement l'entrefer (12) entre la partie intérieure et la partie extérieure (5, 6) de la jante polaire étant réglable.

6. Frein à hystérésis selon l'une des revendications 2 à 4, **caractérisé** en ce que la partie extérieure (5) de la jante polaire présente un dos élastique (8) en forme de rondelle qui entoure au moins partiellement la partie intérieure (6) de la jante polaire, l'entrefer (12) entre le dos (8) de la partie extérieure (5) de la jante polaire et la partie intérieure (6) de la jante polaire étant réglable.

7. Frein à hystérésis selon la revendication 5 ou 6, **caractérisé** en ce que l'entrefer (12) est réglable au moyen d'au moins une vis de fixation (13).

8. Frein à hystérésis selon la revendication 7, **caractérisé** en ce que le dos (8) de la partie extérieure (5) de la jante polaire est pourvue d'un alésage central à travers lequel la vis de fixation (13) peut être introduite et vissée dans la partie intérieure (6) de la jante polaire.
